# EUROPEAN PATENT SPECIFICATION

(11) **EP 1 675 418 B1**
(45) Date of publication and mention of the grant of the patent: **10.06.2009**
(21) Application number: 05027228.5
(22) Date of filing: 13.12.2005
(51) Int. Cl.: H04M 1/2745

(54) **Method and apparatus for control of data synchronization between a user equipment and a user authentication card**
Methode und Apparat für die Steuerung der Datensynchronisation zwischen einem mobilen Endgerät und einer Benutzerauthentifizierungskarte
Procédé et dispositif de commande de synchronisation de données entre l'équipement d'utilisateur et la carte d'authentification d'utilisateur

(30) Priority: 21.12.2004 KR 2004109933
(43) Date of publication of application: 28.06.2006
(73) Proprietor: Samsung Electronics Co., Ltd., Suwon-si, Gyeonggi-Do (KR)
(72) Inventor: Lee, Sang-Jin,, Samsung Electronics Co, Ltd, Suwon-si Gyeonggi-do (KR); Sun, Ho-Kyung, Samsung Electronics Co, Ltd, Suwon-si Gyeonggi-do (KR)
(74) Representative: Grünecker, Kinkeldey, Stockmair & Schwanhäusser Anwaltssozietät

(56) References cited:
- EP-A- 0 757 502
- EP-A- 1 471 753
- WO-A-02/073992
- US-A1- 2002 120 857

## Description

The present invention relates to a user authentication card and a User Equipment (UE) for recognizing the user authentication card, and more particularly to a data synchronization control method between a UE and a user authentication card and the user authentication card according to the method.

When a mobile phone employing a Universal Mobile Telecommunication System (UMTS) scheme or a Global System for Mobile communication (GSM) scheme is powered on with a Subscriber Identity Module (SIM) card, a Universal Subscriber Identity Module (USIM) card or a Removable User Identity Module (RUIM) card inserted into the mobile phone, the mobile phone reads subscriber information from the inserted card, determines if a user is the correct user, and performs data synchronization. Typically, a card (e.g., the SIM card, the USIM card or the RUIM card) is mounted in a cardholder of the mobile phone. The SIM card, the USIM card or the RUIM card as described above are examples of user authentication cards. In addition, a mobile phone is also only an example of a UE using a user authentication card. That is, there are many other types of UEs embodying various other types of user authentication cards.

When a UE using a user authentication card is powered on, the UE performs initialization. This initialization refers to initialization of the UE and the user authentication card and must be differentiated from initialization of the UE itself. During this initialization, the UE passes through a reset process, an Answer to Reset (ATR) process and a Protocol Parameter Selection (PPS) process in order to exchange information with the user authentication card. The initialization is performed to determine physical interface environments between the UE and the user authentication card. Further, the UE does not exchange commands and responses with the user authentication card until the initialization is ended.

The initialization of the UE also includes data synchronization between the UE and the user authentication card. The data synchronization is conventionally performed unconditionally whenever the UE is powered on. That is, the UE reads all information of the user authentication card and compares the read information with information stored in the UE. As the situation requires, the UE modifies the information stored therein.

Hereinafter, the data synchronization between the UE and the user authentication card will be described using a SIM card as an example.

The SIM card as well as a mobile phone using the SIM card may also have a phone book. Accordingly, when the mobile phone is initialized, it is possible to read both the phone book of the SIM card and the phone book of the mobile phone and generate a new phone book by means of a sorting algorithm. When it is assumed that the phone book of the mobile phone can store data for 1000 persons and each data can store five phone numbers, 5000 phone numbers at maximum may exist in the phone book. Further, in a case where it is assumed that the phone book of the SIM card also stores 250 phone numbers, when the mobile phone is powered on after the SIM card is inserted into the mobile phone, 5000 phone numbers are individually compared with the 250 phone numbers for sorting.

Accordingly, performing the data synchronization unconditionally as described above may be very inefficient. That is, a Central Processing Unit (CPU) may perform unnecessary operations if the synchronization does not have to be performed which can waste time and system resources. Accordingly, there is a need to conditionally perform data synchronization dependent upon whether a user identification card has been removed from a UE.

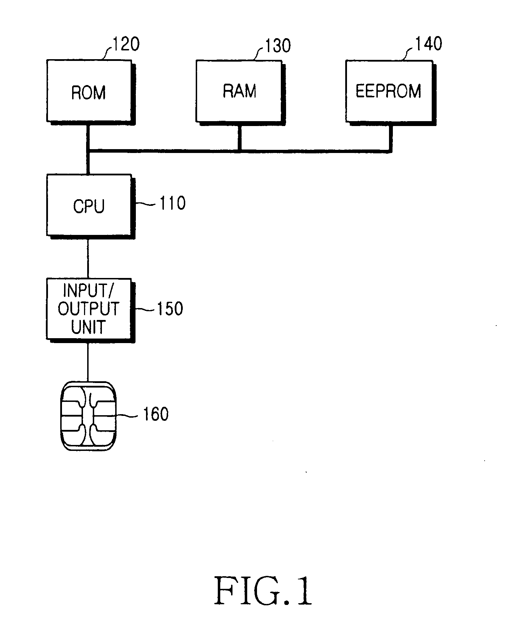

EP 1 471 753 A relates to the securing of a mobile terminal and the execution of applications requiring a high degree of security. The proposed technique is executed by a mobile terminal 1, which is adapted to communicate with other terminals over a telephone network 3. For identifying a user of the mobile terminal 1, the mobile terminal 1 contains a removable identification device, for example a microprocessor or microcircuit card. In a GSM or UMTS network, this identification device is called a "subscriber identification module", SIM. Each mobile terminal is identified by an identification number which is stored in a memory of the terminal in GSM and UMTS, this identification number is called IMEI, International Mobile Terminal Identity. Each mobile terminal and each identification module are programmed for executing a matching procedure, which consists of demanding the mobile terminal to which it is connected its identification number, IMEI, to verify that this number corresponds to a mobile terminal identification number stored by the identification module, and to send a result of this check to the terminal. If the identification module recognizes the terminal to which it is connected, it sets an internal indicator which shows that the terminal is known to be safe and maybe used for sensitive applications. The matching procedure of Figure 1 is executed when the terminal is powered on. First, the mobile terminal transmits terminal characteristics to the identification module, in particular the identification number IMEI. Then, the identification module receives the information and compares the corresponding information which is previously registered. If both pieces of information are identical, the identification module positions an internal indicator lock and sends an acknowledgement message to the mobile terminal which receives this message.

EP 0 757 502 A relates to the over-the-air login of user identity modules for mobile telephones. A mobile telephone network in which user identity module login is activated periodically or regularly queries the internal mobile equipment identity (IMEI) of the mobile telephone being used by subscribers on the system. The mobile terminal contains a user identity module that stores data for controlling the operation of the facilities available to the user of the mobile terminal. Each mobile terminal includes a user identity module that stores pre-programmed data unique to a particular user and an IMEI. Each international mobile equipment identity is unique to its mobile terminal and is used to identify the mobile terminal to the mobile switching centre. The mobile terminal contains a user identity module which stores a unique identifier of a specific user as well as any available authentication functions for that user. The mobile terminal also contains an IMEI.

WO 02/073992 A relates to updating a phone book in a mobile communication system. An exemplary mobile station communicates in a mobile radio network comprising at least one base station. The mobile station comprises two logically and physically separated entities: a subscriber identity module, SIM, card and a mobile equipment. The SIM card can be detached from the mobile equipment and attached to another mobile equipment. The SIM card and mobile equipment can each have memory reserved for storing names, telephone numbers and email addresses. When the mobile station is powered up, it is checked whether the mobile equipment is the same mobile equipment as the mobile equipment that the SIM was connected to last time it was powered up. This can be checked by asking by the SIM for the IMEI of the mobile equipment to which it is connected. A comparison between the present IMEI and the last IMEI is then made at the SIM. If the outcome of the check is that the mobile equipment identity has changed, a service loading program is executed and the phone book contents is retrieved to the mobile equipment phone book.

US 2002/120857 A1 relates to SIM verification during power management. An SIM typically includes a controller and memory housed in a card-like structure. The memory contains user information including a user identifier and a phone book. The SIM may further include a CPU and other control logic and the memory. Computer storage media include RAM, ROM, EEPROM, flash memory or disk media and can be used to store information that can be accessed by the processor of the SIM.

It is the object of the present invention to provide a more convenient method for preventing data synchronization from being performed if information stored in a user authentication card is the same as that stored when a corresponding UE is powered off.

This object is solved by the subject matter of the independent claim.

Preferred embodiments are defined in the dependent claim.

According to an aspect of the present invention, there is provided an apparatus and a method for performing data synchronization conditionally based on the following conditions. For example, if the mobile phone is powered off and then powered on in a state where the SIM card has remains coupled to the mobile phone, a synchronization including a phone book comparison can be omitted because data in the SIM card has not been changed. However, if the SIM card is uncoupled from the mobile phone and then reinserted therein in a state where the mobile phone has been powered off, the comparison must be performed. Accordingly, whenever a mobile phone is powered on in a state where the SIM card has been inserted therein, data synchronization is performed according to predefined conditions.

According to another aspect of the present invention there is provided a method for registering an electronic serial number of a UE in a user authentication card in order to prevent data synchronization from being performed, if information stored in the user authentication card is the same as that stored when the corresponding UE is powered off.

According to a further aspect of the present invention, there is provided a data synchronization method in a User Equipment (UE) including a user authentication card, the UE capable of recognizing the user authentication card, the method including determining whether the user authentication card is recognized when the UE is powered on, reading an electronic serial number from the user authentication card and determining whether the read electronic serial number coincides with an electronic serial number of the UE when the user authentication card is recognized, and controlling data synchronization to be performed only when the two electronic serial numbers do not coincide with each other.

According to yet another aspect of the present invention, there is provided a user authentication card including a memory area for storing an electronic serial number of a User Equipment (UE), a memory area for storing a command defined for requesting the UE to transmit the electronic serial number and a memory area for storing a command defined for requesting transmission of the stored electronic serial number to the UE.

According to still another aspect of the present invention, there is provided a method for storing information of a User Equipment (UE) in a user authentication card, the method including requesting by the user authentication card for the UE to transmit an electronic serial number when the UE is powered on, transmitting by the UE the electronic serial number to the user authentication card in response to the request and receiving and storing by the user authentication card the electronic serial number.

The present invention will be more apparent from the following detailed description taken in conjunction with the accompanying drawings, in which:
FIG. 1 is a block diagram illustrating the construction of a user equipment (UE) including a user authentication card according to an embodiment of the present invention;
FIG. 2 is a flow diagram illustrating a process by which a user authentication card requests a UE to transmit an electronic serial number of the UE, and receives and stores the requested electronic serial number, according to an embodiment of the present invention,; and
FIG. 3 is a flow chart illustrating a process by which a UE determines if data synchronization with a user authentication card must be performed, according to an embodiment of the present invention.

Hereinafter, a preferred embodiment according to the present invention will be described in detail with reference to the accompanying drawings. In the following description, particular items, such as detailed types of a user authentication card, are shown, but these are provided for aiding the general understanding of the present invention. Therefore it will be understood by those skilled in the art that the present invention can be realized without these particular items. In describing the present invention, a detailed description of known functions and configurations incorporated herein will be omitted when it may make the subject matter of the present invention unclear.

FIG. 1 is a block diagram illustrating the construction of a user authentication card according to an embodiment of the present invention. The user authentication card includes a contact unit 160, an input/output unit 150, a central processing unit (CPU) 110, a read-only memory 120, a random-access memory (RAM) 130 and an electronically erasable programmable read-only memory (EEPROM) 140.

The input/output unit 150 inputs data and/or commands from a user equipment (UE) or outputs data and/or commands to the UE through the contact unit 160. A contact type card requires physical contact with an external device in order to obtain power and clock signals for an operation of a chip. The contact unit 160 includes a plurality of terminals for power Vcc, a clock CLK, a reset RST, input/output I/O, etc. It is assumed that the present embodiment is applied to the contact type card. However, in an alternative embodiment a non-contact type card can also be used.

The Read Only Memory (ROM) 120 stores an operating system for the user authentication card.

The Random Access Memory (RAM) 130 is a temporary storage space and may include memory areas according to an embodiment of the present invention. That is, the RAM 130 may include a memory area for storing an electronic serial number of the UE, a memory area for storing a command defined for requesting the UE to transmit the electronic serial number and a memory area for storing a command defined for requesting the user authentication card to provide the stored electronic serial number to the UE. The memory area for storing the electronic serial number of the UE may be embodied in the form of a cyclic elementary file. The cyclic elementary file is a space for storing a terminal's own ID and is one of a plurality of fields capable of storing data in an authentication card. Herein, multiple electronic serial numbers (ESNs) may be stored according to their use history, but a number to be compared is limited to only the electronic serial number of a most recently used UE. In other words, when the UE requests transmission of the stored electronic serial number, the electronic serial number of the most recently used UE must be provided from among the stored electronic serial numbers.

The Electrically Erasable Programmable Read-Only Memory (EEPROM) 140 is a memory for application storage. When it is assumed that the user authentication card is a Subscriber Identity Module (SIM) card, the EEPROM 140 may store a phone book for storing phone numbers of subscribers.

The Central Processing Unit (CPU) 110 reads a command for requesting an electronic serial number from a corresponding memory area, and transmits the read command for requesting an electronic serial number to the UE. That is, when a command for requesting transmission of the stored electronic serial number is received from the UE, the CPU 110 recognizes the received command, reads the requested electronic serial number from a corresponding memory area and transmits the read electronic serial number to the UE.

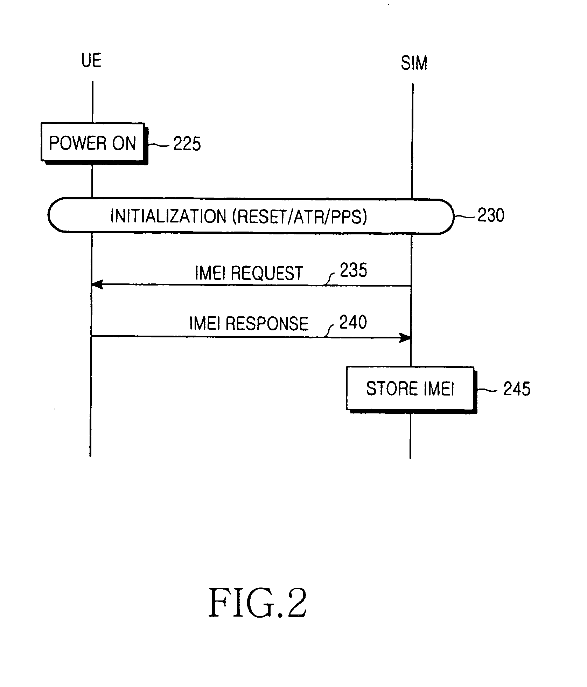

FIG. 2 is a flow diagram illustrating a process by which the user authentication card requests the UE to transmit an electronic serial number of the UE, and receives and stores the requested electronic serial number, according to a preferred embodiment of the present invention.

When the UE is powered on (step 225), a series of reset, Answer-to-Reset (ATR) and Protocol Parameter Selection (PPS) operations are performed between the user authentication card (e.g., a SIM) and the UE (step 230).

The CPU 110 of the user authentication card requests the UE to transmit an electronic serial number through the input/output unit 150 (step 235). When it is assumed that the UE employ a Global System for Mobile communication (GSM) scheme, the electronic serial number may be an International Mobile Station Equipment Identity (IMEI).

The UE transmits its own electronic serial number to the user authentication card in response to the request (step 240). The CPU 110 of the user authentication card stores the electronic serial number of the UE received through the input/output unit 150 in a corresponding memory area (step 245).

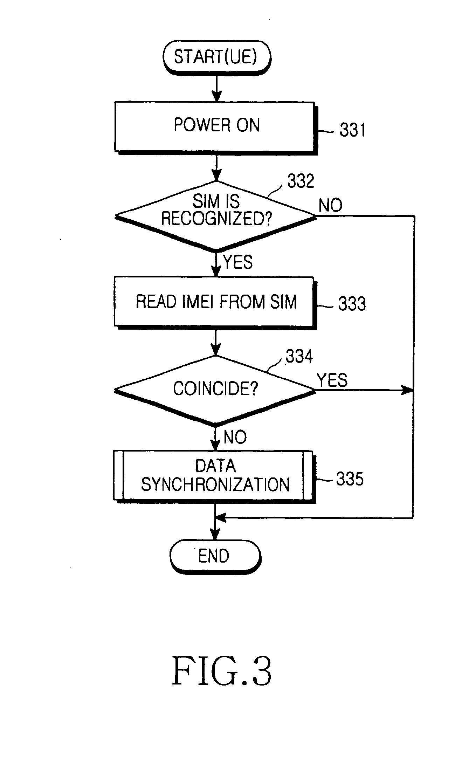

FIG. 3 is a flow chart illustrating a process by which the UE determines if data synchronization with the user authentication card must be performed, according to a preferred embodiment of the present invention.

When the UE is powered on (step 331), the UE determines whether the user authentication card is recognized (step 332). If the user authentication card is recognized, the UE reads an electronic serial number from the user authentication card (step 333). After reading the electronic serial number, the UE determines whether the read electronic serial number coincides with an electronic serial number of the UE (step 334). In the present embodiment, the electronic serial number becomes an IMEI because the user authentication card is assumed to be a SIM.

As a result of the determination in step 334, if it is determined that the two electronic serial numbers coincide with each other, it is determined that it is not necessary to perform the data synchronization. Accordingly, the UE controls the data synchronization to be performed only when the two electronic serial numbers do not coincide with each other (step 335).

According to the present invention as described above, because a user authentication card stores an electronic serial number of a UE having most recently used the user authentication card, the electronic serial number stored in the user authentication card is checked when the UE is initialized. Therefore, it is possible to determine whether data synchronization with the user authentication card is required. Consequently, unnecessary operations can be omitted thus saving time and conserving system resources.

While the present invention has been shown and described with reference to certain preferred embodiments thereof, it will be understood by those skilled in the art that various changes in form and details may be made therein without departing from the scope of the invention as defined by the appended claims.

## Claims

1. A data synchronization method with a user authentication card in a User Equipment, UE, the UE capable of recognizing the user authentication card, wherein the user authentication card stores an electronic serial number of a UE having most recently used the user authentication card, the method comprising the steps of:
inserting the user authentication card into the UE;
powering on (225) the UE;
determining (332) whether the user authentication card is recognized;
**characterised by** reading (333) the stored electronic serial number from the user authentication card and determining (334), by the UE, whether the read electronic serial number coincides with an electronic serial number of the UE; and
synchronizing (335) data between the UE and the user authentication card in the case that it has been determined that the two electronic serial numbers do not coincide with each other.

2. The method of claim 1, further comprising the step of performing (230) a series of reset, Answer-to-Reset, ATR, and Protocol Parameter Selection, PPS, between the user authentication card and the UE before the electronic serial number is requested.

## Patentansprüche

1. Verfahren zum Datenabgleich mit einer Karte zur Benutzerauthentifizierung in einem Endgerät des Benutzers, UE (User Equipment), wobei das UE geeignet ist, um die Karte zur Benutzerauthentifizierung zu erkennen, wobei die Karte zur Benutzerauthentifizierung eine elektronische Seriennummer eines UE, welches zuletzt die Karte zur Benutzerauthentifizierung benutzt hat, speichert und wobei das Verfahren die Schritte umfasst:
Einsetzen der Karte zur Benutzerauthentifizierung in das UE;
Einschalten (225) des UE;
Ermitteln (332), ob die Karte zur Benutzerauthentifizierung erkannt wurde;
**gekennzeichnet durch**,
Lesen (333) der gespeicherten elektronischen Seriennummer von der Karte zur Benutzerauthentifizierung und Ermitteln (334) **durch** das UE, ob die gelesene elektronische Seriennummer mit einer elektronischen Seriennummer des UEs übereinstimmt; und
Abgleichen (335) von Daten zwischen den UE und der Karte zur Benutzerauthentifizierung in dem Fall, dass ermittelt wurde, dass die zwei elektronischen Seriennummern nicht miteinander übereinstimmen.

2. Verfahren gemäß Anspruch 1, des Weiteren umfassend den Schritt des Durchführens (230) einer Reihe von Rücksetzungen (Reset), Antwort-auf-Rücksetzung ATR (Answer-to-Reset), und Protokollparameterauswahl PPS (Protocol Parameter Selection) zwischen der Karte zur Benutzerauthentifizierung und dem UE, bevor die elektronische Seriennummer angefragt wird.

## Revendications

1. Procédé de synchronisation de données avec une carte d'authentification d'utilisateur dans un équipement d'utilisateur UE, l'UE étant capable de reconnaître la carte d'authentification d'utilisateur, dans lequel la carte d'authentification d'utilisateur stocke un numéro de série électronique d'un UE ayant le plus récemment utilisé la carte d'authentification d'utilisateur, le procédé comprenant les étapes qui consistant :
à insérer la carte d'authentification d'utilisateur dans l'UE ;
à mettre sous tension (225) l'UE ;
à déterminer (332) si la carte d'authentification d'utilisateur est reconnue ;
**caractérisé par** la lecture (333) du numéro de série électronique stocké à partir de la carte d'authentification d'utilisateur et le fait de déterminer (334), par l'UE, si le numéro de série électronique lu coïncide avec un numéro de série électronique de l'UE ; et
la synchronisation (335) de données entre l'UE et la carte d'authentification d'utilisateur dans le cas où il a été déterminé que les deux numéros de série électroniques ne coïncident pas entre eux.

2. Procédé selon la revendication 1, comprenant en outre l'étape d'exécution (230) d'une série consistant en une remise à l'état initial, une réponse-pour remise à l'état initial ATR (pour « Answer-to-Reset »), et une sélection de paramètre de protocole, PPS (pour « Protocol Parameter Selection »), entre la carte d'authentification d'utilisateur et l'UE avant que le numéro de série électronique soit demandé.
